# EUROPEAN PATENT SPECIFICATION

(11) **EP 2 532 929 B1**
(45) Date of publication and mention of the grant of the patent: **13.08.2014**
(21) Application number: 11168846.1
(22) Date of filing: 06.06.2011
(51) Int. Cl.: F16H 59/02, F16H 61/36

(54) **Modular gearshift assembly for motor vehicles**
Modulare Schaltanordnung für Kraftfahrzeuge
Ensemble de changement de vitesses modulaire pour véhicules à moteur

(43) Date of publication of application: 12.12.2012
(73) Proprietor: Fico Triad, S.A., 08028 Barcelona (ES)
(72) Inventor: Jou Prat, Ramón, 08790 GELIDA (ES); Gimeno Grané, Santiago, 08225 TERRASSA (ES)
(74) Representative: ZBM Patents - Zea, Barlocci & Markvardsen

(56) References cited:
- EP-A1- 0 756 112
- DE-A1-102005 021 678
- FR-A1- 2 826 451
- JP-U- 53 133 968

## Description

A modular gearshift assembly for motor vehicles is herein disclosed as defined in the preamble of claim 1. This modular gearshift assembly is directed particularly, but not exclusively, to manual transmission shifting mechanisms for motor vehicles.

### BACKGROUND ART

Manual transmission shifting mechanisms are well known in the art, for example in the automotive field. Transmission shifting mechanisms having a ball and socket means comprising a ball attached to or formed integrally with the shift lever and movably accommodated within a housing are also widely known. The housing within which the ball of the ball and socket means is fitted is typically provided with conventional fixing means to attach the assembly to the motor vehicle transmission tunnel. The shift lever to which the ball of the ball and socket means is attached may have a selector pin attached thereto for gear channel selection through the shift lever movement by the user. Such transmission shifting mechanisms are commonly referred to as "ball shifters".

Ball shifters should be carefully designed for being adapted to the particular configuration of each vehicle model where it is to be mounted. Due to the large and varied range of different vehicle models existing in the market, manufacturing specific shifting mechanisms for each particular case is a significant problem due to high costs for adaptation of shifters to each vehicle model.

One example of a ball shifter for manual gearshift mechanisms is disclosed in US patent 5505103. This ball shifter is of the above described type comprising a ball having a shift lever attached thereto and a lateral selector pin for gear change. The ball is mounted within a housing that is provided with a plurality of spaced resilient spring fingers. These resilient fingers form a socket for receiving the ball. The fingers are arranged such that an upper opening is defined through which the shift lever is passed.

US6038939 refers to a modular shifter comprising a base for being attached receiving a lever subassembly. Integral connections are provided for connecting the components together.

FR2826451, which constitutes the closest prior art, discloses a device for simulating gear changes comprising a shift lever with a ball grip movably received within a module, and a support base. This device further includes a selector pin attached to the ball.

However, none of these known solutions are provided with end of travel means formed in the shifter assembly. Therefore the end of travel means for limiting movement of the shift lever are specific for each vehicle model and the shifter assembly must be designed accordingly.

### SUMMARY OF THE INVENTION

A modular gearshift assembly for motor vehicles is herein disclosed suitable for, but not limited to, manual transmission shifting mechanisms for motor vehicles. This modular gearshift assembly is universal, that is, designed and intended for being adapted to a large number of different configurations in a wide range of vehicle models having different interior designs.

As used herein, 'modular' stands for an assembly that is made of standardized parts that can be attached to each other and having variable dimensions for the purpose of flexibility and variety in use on a wide range of vehicle models.

The present modular gearshift assembly for motor vehicles that is herein disclosed comprises a ball and socket connection. This ball and socket connection includes a ball such as it is known in the art and as disclosed above with regard to prior art ball gearshift assemblies that is attached to or formed integrally with a shift lever for selecting gearing of the vehicle. A selector pin is also provided attached to or connected with said ball for gear channel shifting.

The present modular gearshift assembly further includes a base module within which the ball, having the shift lever and the selector pin attached thereto or formed integrally therewith, is movably accommodated. For this purpose, it is preferred that at least an inner portion of the base module is cylindrical in shape, although many shapes for the present ball shifter are of course possible. This inner portion of the base module may define a portion within which the ball is movably accommodated.

The base module of the present modular gearshift assembly may be shaped to conform to the inner shape of a support base that is provided to be fixed to or mounted on the motor vehicle, particularly to the transmission tunnel.

According to one aspect of the disclosed modular gearshift assembly, end of travel means are provided for limiting movement, e.g. rotation, of the shift lever. The end of travel means may be provided within the base module and in some embodiments said end of travel means may be provided in the releasable bottom cover, and still in further embodiment even both in the base module and the bottom cover. In any case, the end of travel means can be preferably formed integral with the base module or any part thereof.

The advantages of the provision of the end of travel means are a higher degree of design flexibility such that the disclosed modular gearshift assembly can be easily adapted to different configurations of gear cases and platforms. This is made possible due to the possible present embodiments in which the end of travel means are fitted either within the base module or in the releasable bottom cover or in both parts indistinctly.

The provision of end of travel means within the base module of the disclosed gearshift assembly provides for standardization for different gear case configurations. The provision of end of travel means in the releasable bottom cover of the disclosed gearshift assembly provides for standardization for different vehicle platforms.

In addition, the provision of the end of travel means as disclosed can be effected in easily visible regions of the gearshift assembly, e.g. such as they can be viewed from the top. This allows an easy and efficient final adjustment of the parts.

In some embodiments of this assembly it is envisaged that the base module may be provided with a releasable bottom cover. This bottom cover is adapted for closing a housing and retaining the ball therein. A bearing may be fitted inside the housing for cooperating with the ball.

The assembly may include a selector cam for gear channel selection. The selector cam is connected with the base module through suitable connecting means, for example in the form of a shaft. The selector cam is driven by the selector pin for performing gear channel selection. For this purpose, the selector cam may be provided with a first passage for receiving the connecting means and a second passage for receiving said selector pin.

Still in some embodiments, the assembly may further include spring means, for example a torsion spring, for acting on the selector cam in order to urge it into a neutral position. The torsion spring could be provided in at least one of such first and second passages of the selector cams.

The disclosed modular gearshift assembly may be also provided with means for inhibiting reverse gear position. More specifically, such reverse gear position inhibiting means may comprise a locking member that is linked with (attached to or formed integrally with) the shift lever. The locking member is arranged such that it protrudes outwards from the shift lever. This locking member is adapted to contact, although it is not necessarily always abutting, a sliding surface formed in the modular gearshift assembly, for example on a top portion thereof. The locking member may slide, either continuously or discontinuously, on said sliding surface as the shift lever is driven by the user into reverse gear position. Therefore, reverse gear position can only be reached after the locking member has gone beyond said sliding surface.

A strong, compact modular assembly can be thus achieved through which vibrations in use can be greatly reduced. The modular nature of the disclosed modular gearshift assembly comes from the three main subassemblies which the present gearshift assembly is made of: ball and lever subassembly, base module subassembly and support base subassembly. This construction allows a compact assembly to be manufactured with a simple and efficient installation, both top and bottom mounting in vehicle transmission tunnels. This modular nature of the present gearshift assembly allows for a high standardization of parts and manufacturing process as well as for a high customization: different ratios can be easily obtained by changing shift lever lengths.

Additional objects, advantages and features of embodiments of the disclosed modular gearshift assembly will become apparent to those skilled in the art upon examination of the description, or may be learned by practice of the invention.

### BRIEF DESCRIPTION OF THE DRAWINGS

Particular embodiments of the present modular gearshift assembly will be described in the following by way of non-limiting examples, with reference to the appended drawings, in which:
Figure 1 is a perspective view of a shift lever that is part of one embodiment of the disclosed modular gearshift assembly, this figure depicting one example of a ball and shift lever subassembly;
Figure 2 is a perspective view of the shift lever in figure 1 fitted in a base module that is part of the disclosed modular gearshift assembly, this figure depicting the example of the ball and shift lever subassembly in Fig. 1 fitted in a base module subassembly;
Figure 3a is an exploded perspective view of the example of the ball and shift lever subassembly fitted in a base module subassembly according to figures 1 and 2, showing a support subassembly for top mounting;

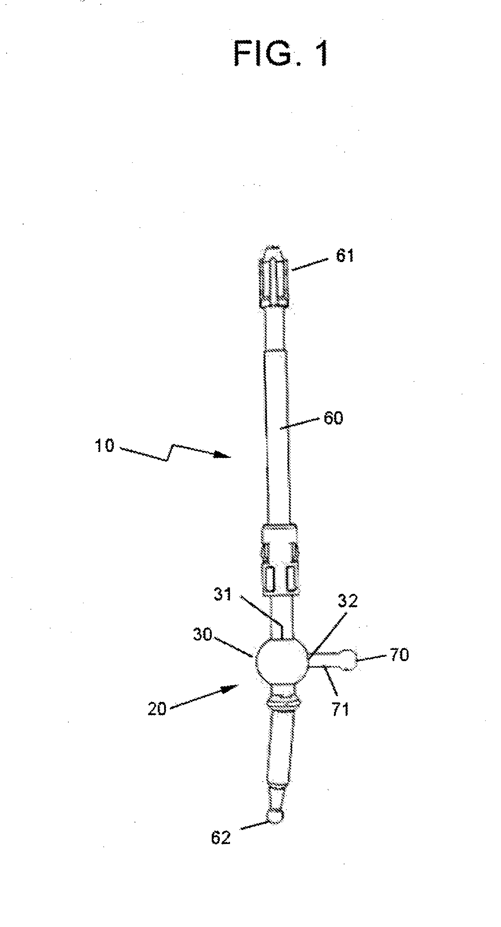

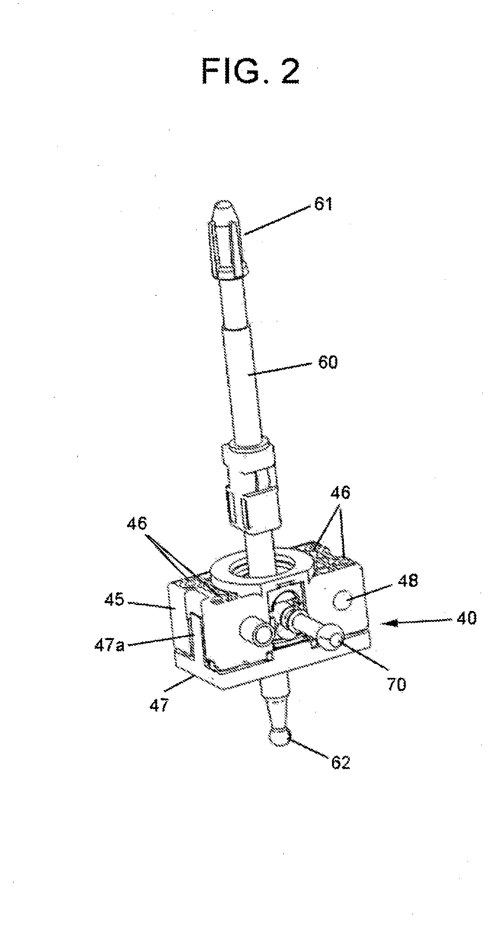

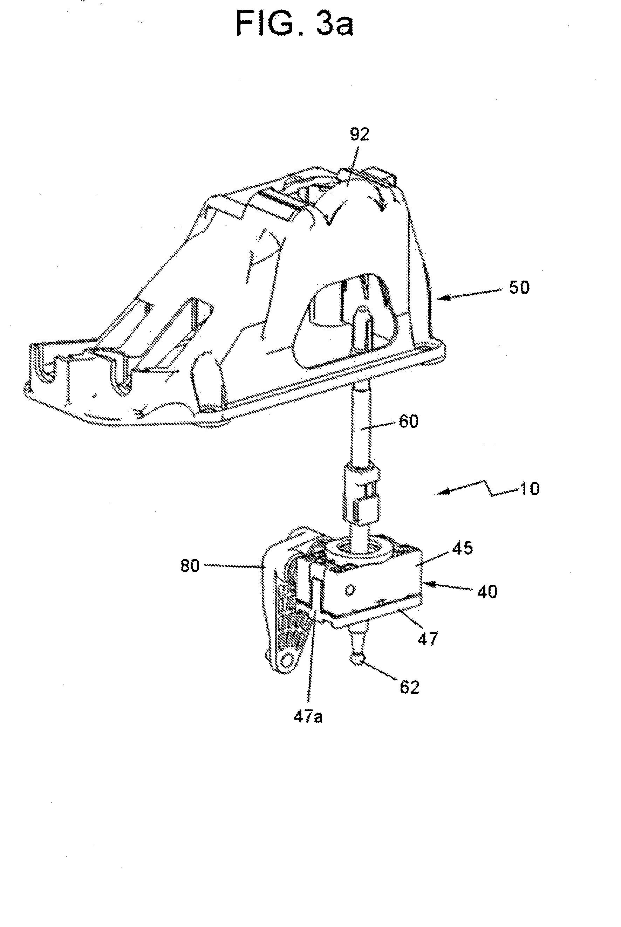

Figure 3a is an exploded perspective view of the example of the ball and shift lever subassembly fitted in a base module subassembly according to figures 1 and 2, showing a support subassembly for bottom mounting;

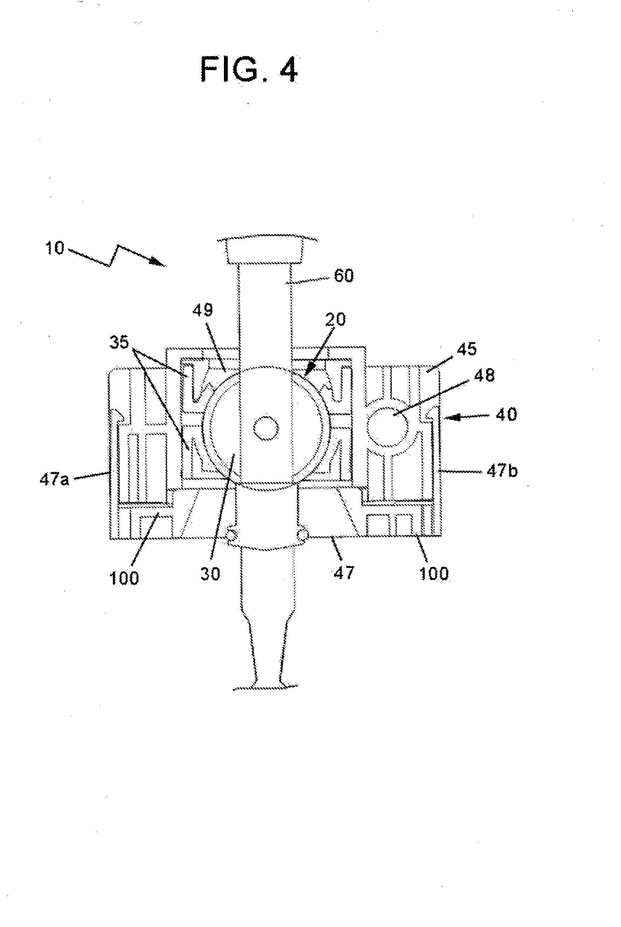

Figure 4 is an elevational sectional view of the example of the ball and shift lever subassembly fitted in a base module subassembly;

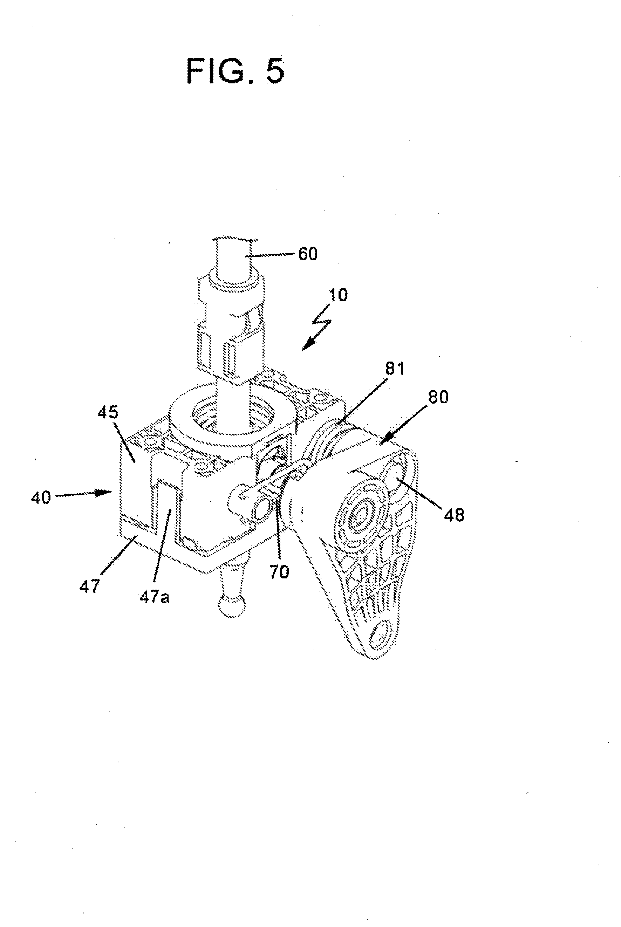

Figure 5 is a perspective view of the example of the ball and shift lever subassembly fitted in a base module subassembly as in figure 2, in which the selector cam is shown; and

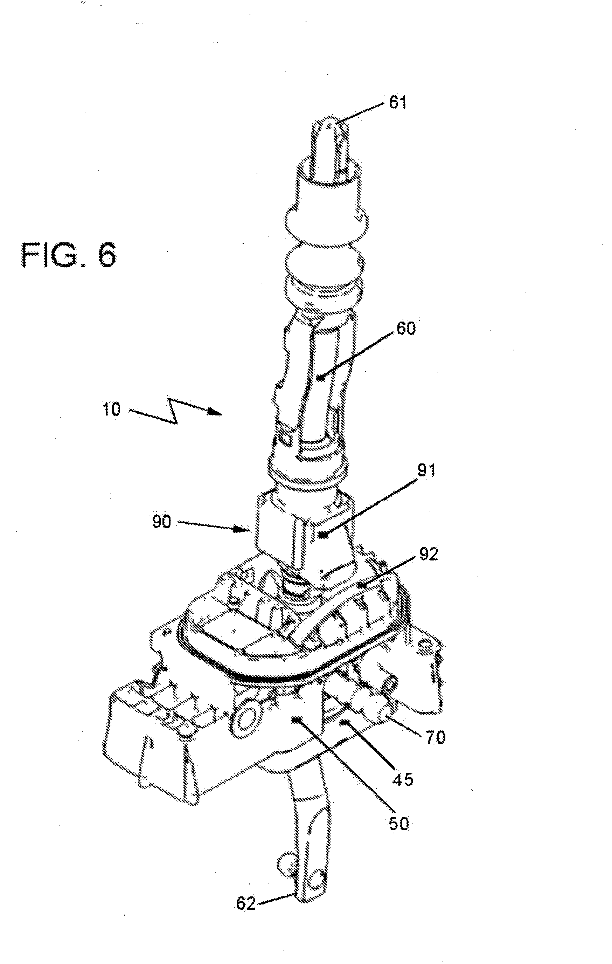

Figure 6 is a perspective view of one embodiment of a modular gearshift assembly provided with reverse gear position inhibiting means.

### DETAILED DESCRIPTION OF EMBODIMENTS OF THE INVENTION

One possible embodiment of a modular gearshift assembly for motor vehicles as disclosed herein is shown in the figures 1-6. The modular gearshift assembly has been indicated as a whole at 10. It should be noted that similar o corresponding parts are denoted by the same reference numerals throughout the disclosure.

The embodiment of the modular gearshift assembly 10 for motor vehicles shown in the exemplary drawings comprises a ball and socket connection 20 that includes a ball 30. A shift lever 60 is attached to or formed integrally with the ball 30. The shift lever 60 comprises an upper end 61 adapted for receiving a knob and a lower end 62 for gear selection. A selector bar 71 is also provided protruding outwards from the ball 30 one end of which is provided with a selector pin 70 for gear channel selection. The selector bar 71 is attached to or formed integrally with the ball 30. In a preferred embodiment, and as described below, the selector bar 71 is a separate part to be inserted within a hole 32 formed in the ball 30.

The ball 30 of the ball and socket connection 20 is provided with a first hole 31 and a second hole 32. The first hole 31 is sized such that its diameter is suitable for receiving different shift levers 60 of a wide range of different lengths as required. As previously described, the ball 30 further has a second hole 32 that is sized such that its diameter is suitable for receiving selector bars 71 of different lengths as required.

The above construction defines what can be referred to as ball and lever subassembly.

Referring now to figure 2 of the drawings, the modular gearshift assembly 10 further comprises a base module 40 comprising a housing 45. The base module 40 is provided with means for attaching the modular gearshift assembly 10 to the inside of a motor vehicle. The housing 45 may be provided with centering pins (not shown) for the purpose of absorbing tolerances and for facilitating assembling operations.

An inner portion 49 of the housing 45 in the base module 40 is cylindrical in shape, as shown in figure 4. This inner portion 49 of the housing 45 defines a socket that is suitable for accommodating the ball 30. In use, the ball 30 is received into the socket in said inner portion 49 of the housing 45 in a way that it can be moved as the lever 60 is actuated by the user in any direction in gear shifting operations.

The housing 45 of the base module 40 further includes a releasable bottom cover 47. The releasable bottom cover 47 is suitable for closing the housing 45 and retaining the ball 30 therein. This bottom cover 47 is provided with side clips 47a, 47b intended for securing the bottom cover 47 to the housing 45. The clipped configuration of the releasable bottom cover 47 allows rapid assembling and disassembling operations to be performed.

In the embodiment shown, a bearing 35 is fitted inside the inner portion 49 of the housing 45 for cooperating with the ball 30. Bearing 35 allows for rotation of ball 30.

The above construction defines what can be referred to as base module subassembly.

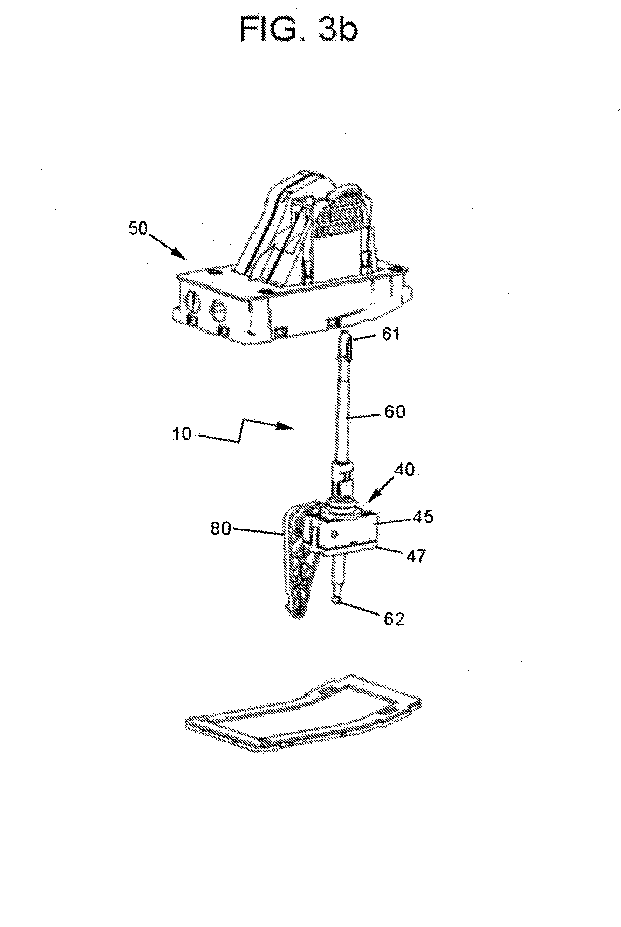

The modular gearshift assembly 10 further comprises a support base 50. One embodiment of such a support base 50 is shown in figure 3 of the drawings. The support base 50 may be adapted to be fixed to the motor vehicle from the top of the vehicle transmission tunnel or it may be adapted to be fixed to the motor vehicle from the bottom of the vehicle transmission tunnel. Both versions for the support base 50 have a number holes 46 in common. These holes 46 are formed in correspondence with respective holes formed on top of the base module 40 and allow such dual top/bottom mounting to be carried out through a substantially similar structure.

In the particular embodiment shown, the base module 40 is shaped to conform to the inner shape of the support base 50.

The above construction defines what can be referred to as support base subassembly.

Continuing with the above described support base subassembly of the modular gearshift assembly 10, end of travel means 100 are further provided. The end of travel means 100 allows for limiting the operational stroke of the movement, i.e. rotation, of the shift lever 60. The end of travel means 100 are provided within the base module 40, particularly in the releasable bottom cover 47.

The end of travel means 100 are usually provided in each vehicle model according to the stroke of the gearshift assembly and the particular kinematics of the shift lever assembly. In this case, the end of travel means 100 are fitted in the base module 40 and more particularly they are formed in the releasable bottom cover inner walls as integral part thereof. Therefore, by simply varying the shape of the inner walls, different end of travel means 100 can be obtained according to the shift lever design and the other requirements.

As shown in figure 6, means for inhibiting reverse gear position 90 are also provided. They comprise a locking member 91 attached to or formed integrally with the shift lever. The locking member 91 is arranged such that it protrudes outwards from the shift lever 60. The locking member 91 is adapted to contact a sliding surface 92 formed in the modular gearshift assembly, for example on a top portion thereof. It is understood that the locking member 91 is not necessarily always abutting on the sliding surface 92. Therefore, as the shift lever 60 is driven by the user into reverse gear position, the locking member 91 slides, either continuously or discontinuously, on the sliding surface 92. A reverse gear position can only be reached after the locking member 91 has gone beyond said sliding surface 92.

As shown in figures 3 and 5, the assembly further includes a selector cam 80. As shown in figures 2 and 4, the housing 45 of the base module 40 is provided with connecting means 48 at one side thereof. By means of such connecting means 48, the selector cam 80 can be connected to the base module 40. The connecting means 48 is in the form of a cylindrical shaft although other shapes and configurations are also possible. The selector cam 80 is driven by the selector pin 70 for gear channel selection. The selector cam 80 is provided with a first passage for receiving the connecting means 48 and a second passage for receiving said selector pin 70.

The assembly 10 further includes spring means 81 acting on the selector cam 80 for urging it into a neutral position. Suitable spring means 81 may comprise, for example, a torsion spring. The spring means 81 can be mounted on at least one of said first and second passages of the elector cam 80.

The assembling operation of the modular gearshift assembly 10 can be carried out quickly and easily as follows: first, the shift lever 60 with the ball and socket connection 20 (ball and lever subassembly) is fitted into the base module 40 (base module subassembly). Then the selector cam 80 is coupled thereto after which the resulting assembly is secured on the support base 50 (support base subassembly). The ball and lever, base module and support base subassemblies forming the modular gearshift assembly are then ready for operation.

Although only a number of particular embodiments and examples of the present modular gearshift assembly have been disclosed herein, it will be understood by those skilled in the art that other alternative embodiments and/or uses thereof as well as obvious modifications and equivalents are possible. Furthermore, all possible combinations of the particular embodiments described are included.

## Claims

1. A modular gearshift assembly (10) for motor vehicles comprising:
- a ball and socket connection (20) including a ball (30);
- a base module (40) within which the ball (30) is movably accommodated;
- a support base (50) to be fixed to the motor vehicle;
- a shift lever (60) and a selector pin (70) attached to the ball (30); and
- end of travel means for limiting movement of the shift lever (60);
**characterized in that**
it further includes a selector cam (80), the base module (40) having connecting means (48) at one side thereof by means of which the selector cam (80) can be connected to the base module (40), said selector cam (80) being provided with a first passage for receiving the connecting means (48) and a second passage for receiving said selector pin (70).

2. The assembly (10) of claim 1, wherein the base module (40) has a housing (45) and a releasable cover (47) at the bottom thereof for closing the housing (45) and retaining the ball (30) therein.

3. The assembly (10) of claim 1, wherein the end of travel means are provided within the base module (40).

4. The assembly (10) of claim 2, wherein the end of travel means are provided in the releasable cover (47).

5. The assembly (10) of claim 2, wherein a bearing (35) is fitted inside the housing (45) in such a way that it cooperates with the ball (30).

6. The assembly (10) of any of the preceding claims, wherein at least an inner portion of the base module (40) is cylindrical in shape.

7. The assembly (10) of claim 1, wherein it further includes spring means (81) acting on the selector cam (80) for urging it into a neutral position.

8. The assembly (10) of any of the preceding claims, wherein the base module (40) is shaped to conform to the inner shape of a support base (50) in the motor vehicle.

9. The assembly (10) of any of the preceding claims, wherein it further comprises means (90) for inhibiting reverse gear position.

10. The assembly (10) of claim 9, wherein the means (90) for inhibiting reverse gear position comprise a locking member (91) associated with the shift lever (60) and protruding outwards therefrom which is adapted to contact a sliding surface (92) formed in the modular gearshift assembly (10).

11. The assembly (10) of claim 9, wherein the sliding surface (92) is formed on top of the modular gearshift assembly (10).

## Patentansprüche

1. Eine modulare Schaltanordnung (10) für Kraftfahrzeuge umfassend:
- ein Kugelgelenk (20) umfassend eine Kugel (30):
- ein Basismodul (40) worin die Kugel (30) beweglich gelagert ist;
- eine Stützbasis (50), die an das Kraftfahrzeug anzubringen ist;
- einen Schalthebel (60) und einen Schaltfinger (70), die an der Kugel (30) befestigt sind; und
- eine Anschlagsvorrichtung zur Beschränkung der Bewegung des Schalthebels (60);
**dadurch gekennzeichnet, dass**
sie weiterhin einen Schaltnocken (80) umfasst, wobei das Basismodul (40) ein Verbindungsmittel (48) an einer Seite dessen hat, mittels dessen der Schaltnocken (80) mit dem Basismodul (40) verbunden werden kann, wobei der Schaltnocken (80) mit einem ersten Durchlass zum Empfangen des Verbindungsmittels (48) und einem zweiten Durchlass zum Empfangen des Schaltfingers (70) versehen ist.

2. Die Anordnung (10) des Anspruchs 1, wobei das Basismodul (40) ein Gehäuse (45) und eine lösbare Abdeckung (47) im unteren Ende dessen hat, um das Gehäuse (45) zu schließen und die Kugel (30) darin einzubehalten.

3. Die Anordnung (10) des Anspruchs 1, wobei die Anschlagsvorrichtung im Basismodul (40) bereitgestellt ist.

4. Die Anordnung (10) des Anspruchs 2, wobei die Anschlagsvorrichtung in der lösbaren Abdeckung (47) bereitgestellt ist.

5. Die Anordnung (10) des Anspruchs 2, wobei ein Lager (35) im Gehäuse (45) so eingebaut ist, dass es mit der Kugel (30) zusammenwirkt.

6. Die Anordnung (10) von einer der vorhergehenden Ansprüche, wobei mindestens ein innerer Teil des Basismoduls (40) zylindrisch ist.

7. Die Anordnung (10) des Anspruchs 1, wobei sie weiterhin ein Federmittel (81) umfasst, welches auf den Schaltnocken (80) wirkt, um ihn in eine neutrale Position zu drängen.

8. Die Anordnung (10) von einer der vorhergehenden Ansprüche, wobei das Basismodul (40) so ausgeformt ist, dass es an die innere Form einer Stützbasis (50) im Kraftfahrzeug angepasst ist

9. Die Anordnung (10) von einer der vorhergehenden Ansprüche, wobei sie weiterhin ein Mittel (90) zur Hemmung des Rückwärtsgangs umfasst.

10. Die Anordnung (10) des Anspruchs 9, wobei das Mittel (90) zur Hemmung des Rückwärtsgangs ein Verriegelungselement (91) umfasst, das mit dem Schalthebel (60) assoziiert ist und das nach außen dessen herausragt, welches angepasst ist um mit einer Gleitfläche (92) in Berührung zu kommen, die in der modularen Schaltanordnung (10) gebildet ist.

11. Die Anordnung (10) des Anspruchs 9, wobei die Gleitfläche (92) auf der Oberseite der modularen Schaltanordnung (10) gebildet ist.

## Revendications

1. Un ensemble (10) de changement de vitesses modulaire pour véhicules à moteur comprenant:
- une connexion (20) à rotule incluant une rotule (30);
- un module (40) de base dans lequel la rotule (30) est logée de façon mobile;
- une base (50) de support destinée à être fixée au véhicule à moteur;
- un levier (60) de vitesses et un doigt (70) de commande de changement de vitesses qui est fixé sur la rotule (30); et
- un dispositif de fin de course pour limiter le mouvement du levier (60) de vitesses;
**caractérisé en ce qu'**il
inclut en outre une came (80) de sélection, ayant le module (40) de base un moyen (48) de connexion sur un côté du même, moyennant lequel la came (80) de sélection peut être connectée au module (40) de base, étant ladite came (80) de sélection fournie avec un premier passage pour recevoir le moyen (48) de connexion et un deuxième passage pour recevoir ledit doigt (70) de commande de changement de vitesses.

2. L'ensemble (10) de la revendication 1, dans lequel le module (40) de base a un boîtier (45) et un couvercle amovible (47) fixé à sa base pour fermer le boîtier (45) et pour retenir la rotule (30) en cela.

3. L'ensemble (10) de la revendication 1, dans lequel le dispositif de fin de course est fourni dans le module (40) de base.

4. L'ensemble (10) de la revendication 2, dans lequel le dispositif de fin de course est fourni dans le couvercle amovible (47).

5. L'ensemble (10) de la revendication 2, dans lequel un palier (35) est monté dans le boîtier (45) de façon qu'il coopère avec la rotule (30).

6. L'ensemble (10) de l'une quelconque des revendications précédentes, dans lequel au moins une partie intérieure du module (40) de base a une forme cylindrique.

7. L'ensemble (10) de la revendication 1, dans lequel il inclut en outre un dispositif (81) de ressort agissant sur la came (80) de sélection pour la pousser à adopter une position neutre.

8. L'ensemble (10) de l'une quelconque des revendications précédentes, dans lequel le module (40) de base est formé de façon qu'il se conforme à la forme intérieure d'une base (50) de support dans le véhicule à moteur.

9. L'ensemble (10) de l'une quelconque des revendications précédentes, dans lequel il comprend en outre un moyen (90) pour inhiber la position d'engrenage inverse.

10. L'ensemble (10) de la revendication 9, dans lequel le moyen (90) pour inhiber la position d'engrenage inverse comprend un organe (91) de verrouillage associé avec le levier (60) de vitesses et qui fait saillie vers l'extérieure du même qui est adapté pour contacter une surface (92) de glissement formée dans l'ensemble (10) de changement de vitesses modulaire.

11. L'ensemble (10) de la revendication 9, dans lequel la surface (92) de glissement est formée au sommet de l'ensemble (10) de changement de vitesses modulaire.
